# EUROPÄISCHE PATENTSCHRIFT

(11) **EP 0 417 533 B1**
(45) Veröffentlichungstag und Bekanntmachung des Hinweises auf die Patenterteilung: **10.11.1993**
(21) Anmeldenummer: 90116321.2
(22) Anmeldetag: 25.08.1990
(51) Int. Cl.: B23K 11/24, B23K 11/25

(54) **Schweissverfahren und Vorrichtung**
Welding method and device
Méthode et procédé de soudage

(30) Priorität: 12.09.1989 DE 3930378
(43) Veröffentlichungstag der Anmeldung: 20.03.1991
(73) Patentinhaber: ARO S.A., F-72500 Château-du-Loir (FR)
(72) Erfinder: Boyer, Jean-Noel, F-72500 Luceau (FR); Pellegrini, Henri, F-72500 Château-du-Loir (FR)
(74) Vertreter: Lempert, Jost, Dipl.-Phys. Dr. rer.nat.

(56) Entgegenhaltungen:
- US-A- 4 634 830
- PATENT ABSTRACTS OF JAPAN vol. 6, no. 1 (M-105)(879) 07 Januar 1982,& JP-A-56 126084 (MIYACHI DENSHI K.K.) 02 Oktober 1981,
- PATENT ABSTRACTS OF JAPAN vol. 13, no. 300 (M-848)(3648) 11 Juli 1989,& JP-A-191978 (KOHOKU KOGYO K.K.) 11 April 1989,

## Beschreibung

Die Erfindung betrifft ein Verfahren zum Widerstandsschweißen mittels Wechselstrom, wobei während einer Periode der tatsächliche effektive Schweißstrom gemessen wird und die Phasenverschiebung des Einsatzes des Stromflusses während der nächsten Periode der Wechselspannung regelt, sowie eine Schweißvorrichtung zum Schweißen mittels Wechselstroms mit zwei Schweißelektroden, einer Energieversorgung für diese sowie einer Einrichtung zur Regelung des effektiven Schweißstroms während jeder Periode der Wechselspannung.

Beim Widerstandsschweißen fließt ein beträchtlicher Strom durch übereinander angeordnete Bleche oder Teile, die zwischen zwei Elektroden oder Werkzeugteilen zusammengepreßt werden. Der Kontaktwiderstand zwischen den Blechen, die in der Regel aus Stahl bestehen, ist beträchtlich. Der Stromfluß bewirkt eine Erhitzung, die wiederum zur Bildung eines Kerns geschmolzenen Metall aus beiden Blechen führt, wodurch beim Erkalten die gewünschte Verbindung erzielt wird.

Die zur Bildung des Schmelzkerns erforderliche Energie ist rI²t, wobei r die Summe der elektrischen Widerstände, I der Effektivstrom und t die Gesamtzeit des Stromflusses ist.

Um eine Widerstandsschweißung hoher Qualität zu erhalten muß daher ein genau bestimmtes Produkt rI²t erhalten werden. Da der Widerstand, der im wesentlichen durch die Kontaktwiderstände bestimmt ist, von den miteinander zu verbindenden Teilen abhängt, sind die Parameter, an denen die Steuerung oder Regelung der Schweißung ansetzen kann, die Schweißzeit und die Schweißintensität, d.h. der effektive Schweißstrom.

Es sind Steuersysteme zum Verschweißen mit automatischer Variation der Schweißzeit bekannt. Die Bedingungen automatischer Fabrikation erfordern aber minimale und vor allem exakte Zeiten der Arbeitszyklen, was vorhersehbare Schweißzeiten verlangt und daher Lösungen mit der Steuerung oder der Regelung des Stromes bei voreingestellter Zeit bevorzugen läßt.

Bekannte Widerstandsschweißmaschinen weisen eine elektrische Primärversorgung mit beispielsweise 220 oder 380 Volt Wechselspannung auf. Sie sind mit einem Thyristorunterbrecher aus zwei gegengerichteten Thyristoren versehen, deren Steuereingänge durch eine Steuerelektronik gesteuert werden. Der Unterbrecher versorgt die Primärspule eines Schweißtransformators, dessen Sekundärspule, die in der Regel eine Spannung von 3 bis 20 Volt liefert, mit Armen bzw. an diesen befestigten Elektroden der Schweißmaschine verbunden ist. Der Strom fließt über die Elektroden und bewirkt so die Verschweißung von zwischen diesen angeordneten Blechen. Hierzu werden die Elektroden auf die Bleche mit einer vorbestimmten Kraft von in der Regel mehreren Hundert Decanewton - in der Regel pneumatisch - aufgedrückt.

Zur Steuerung des Schweißstromes sind zwei Verfahren bekannt. Beide Verfahren ermöglichen das Arbeiten mit einer vorbestimmten konstanten Schweißzeit. Im allgemeinen wird in der Schweißtechnik die Schweißzeit in der Zahl der Perioden des elektrischen Stroms bzw. der elektrischen Spannung ausgedrückt. Beispielsweise entspricht eine Schweißung von 10 Perioden bei einer 50 Hertz Spannungsversorgung einer Schweißzeit von 0,2 Sekunden. Bei allen bekannten Verfahren mit Tyristorsteuerung zur Regelung des Stromes wird der Zündwinkel oder die Zündphase des Thyristors gesteuert.

Eine einfache Steuerung des Schweißstromes erlaubt die Zahl der Perioden des Wechselstroms, während der ein Stromfluß durch den Schweißpunkt erlaubt wird, und einen Zündwinkel ψ des Thyristors bei jedem Polarisationswechsel zu programmieren, wodurch der Effektivwert der Schweißintensität eingestellt werden kann. Die Zündung der Thyristoren erfolgt also um einen Winkel ψ nach dem Nulldurchgang der Spannung und die Intensität des Stromes erreicht Null erst bei einem Winkel φ nach dem erneuten Nulldurchgang der Spannung der Winkel ψ dient als Steuerwert, während der Winkel φ sich lediglich aufgrund des Blindwiderstands (Reaktanz) des elektrischen Stromkreises der Maschine ergibt.

Diese bekannte Stromsteuerung durch Veränderung des Zündwinkels der Tyristoren steuert tatsächlich den mittleren Strom oder den Effektivstrom während der Periode, der für die Schweißung bestimmend ist.

Dieses offene System ohne Messung des tatsächlichen Stromflußes und ohne Regelung garantiert keine konstante Schweißintensität weder während einer Punktschweißung noch von einer Punktschweißung zur nächsten. Tatsächlich kann das Verhältnis U/Z = I ( U Effektivspannung, I Effektivstrom, Z Impedanz) aufgrund von Fluktuationen der Primärspannung oder Variationen der Gesamtimpedanz der Installation variieren.

Es wurde daher schon ein Verfahren vorgeschlagen, bei dem der Schweißstrom geregelt wird. Hierzu wird die effektive Schweißintensität während jeder Periode gemessen und mit einem Sollwert verglichen. Ein Analog- oder Digitalrechner bestimmt aus diesem Vergleich den gewünschten Zündwinkel des Thyristors für die nächste Periode, um während dieser Periode eine Intensität gleich der vorgegebenen Sollintensität zu erreichen. Eine Vorrichtung zur Durchführung dieses Verfahrens weist einen Rechner zur Bestimmung der Verschiebung des Zündwinkels sowie eine Spule und ein nachgeordnetes Integrationsglied zur Messung des tatsächlichen Schweißstromes auf. Dieses Verfahren erlaubt Spannungs- und Impedanzveränderungen während einer Schweißperiode bei der Folgeperiode n+1 zu berücksichtigen.

Beispielsweise kann während einer ersten Periode einer Schweißung der geflossene Strom wesentlich geringer sein als der Sollwert, was tatsächlich bei dem Beginn einer neuen Schweißung oft der Fall ist, da das System keine Vorreferenzen für den Winkel ψ kennt. Die nachfolgenden Perioden können dann in der beschriebenen Weise geregelt werden, so daß, soweit beispielsweise die Spannungsversorgung konstant bleibt, der tatsächlich geflossene Strom dem Sollwert entspricht. Fällt aber die Spannung ab, beispielsweise durch gleichzeitige Schweißung einer anderen ans gleiche Netz angeschlossenen Maschine, ergibt sich ein geringerer tatsächlicher Stromfluß, der erst wieder bei den weiteren Perioden durch die Regelung berücksichtigt wird, so daß bei diesen der Stromfluß dem Sollwert entspricht. Insgesamt ergibt sich, daß hierdurch die bei einer Schweißung gegebene mittlere Intensität auch bei perfektem Funktionieren der Regelung niedriger ist als der Sollwert, so daß der Schweißpunkt nicht die gewünschten vorgesehenen Eigenschaften aufweist.

Die US-A-4 634 830 zeigt ein Verfahren zur Steuerung des Schweißstroms beim Widerstandsschweißen, bei dem die Vorgaben und Meßdaten der ersten Halbwelle einer vollständigen Periode zur Bestimmung der Vorgaben, nämlich Strom und Schweißwinkel für die zweite Halbwelle der gleichen Periode, bestimmt werden. Hierbei bleiben bei allen Perioden Fehler, die sich über die Gesamtzahl der Perioden während eines Schweißzyklus aufaddieren.

Der Erfindung liegt die Aufgabe zugrunde, Schweißungen optimaler Qualität sicherzustellen.

Erfindungsgemäß wird die genannte Aufgabe bei einem Verfahren der eingangs genannten Art dadurch gelöst, daß Abweichungen des tatsächlichen effektiven Schweißstroms während sämtlicher ausgeführter Schweißperioden gegenüber einem gewünschten Effektivstrom während der noch auszuführenden Schweißperioden berücksichtigt werden. Zur Lösung der Aufgabe sieht eine Vorrichtung der gattungsgemäßen Art vor, daß die Spule zur Messung des Schweißstromes über einen Integrator zur Aufintegration des gemessenen Stromes mit dem Rechner zur Berücksichtigung von Abweichungen des tatsächlichen effektiven Schweißstromes während vorangegangener Schweißperioden einer Schweißung gegenüber einem gewünschten effektiven Schweißstromfluß bei den weiteren durchzuführenden Schweißperioden der jeweiligen Schweißung verbunden ist.

Durch die Erfindung wird sichergestellt, daß über die gesamte Dauer einer Schweißung, wie das Setzen eines Schweißpunktes, der fließende mittlere Effektivstrom den gewünschten Sollwert hat. Der wesentliche Unterschied zwischen der Erfindung und dem vorbekannten Regelsystem an sich liegt darin, daß zusätzlich zu jedem Zeitpunkt der Überschuß oder der Mangel der Schweißintensität über die Gesamtheit der ausgeführten Schweißperioden bestimmt wird und dieser Überschuß oder Mangel über die Gesamtheit der noch auszuführenden Perioden der Wechselspannung verteilt wird, damit die durch den Schweißpunkt hindurchgeflossene mittlere Effektivstromintensität über die gesamte Schweißung hin dem gewünschten Wert entspricht. Bevorzugt ist vorgesehen, daß die Abweichungen zur Anpassung des Sollwerts für die Regelung der Phasenverschiebung herangezogen werden. Der der an sich bekannten Regelung zugrundeliegende Sollwert wird also erfindungsgemäß unter Berücksichtigung des schon geflossenen tatsächlichen Schweißstroms über die ausgeführten Perioden der Wechselspannung angepaßt oder adaptiert und die Abweichung über die noch auszuführenden Perioden verteilt, damit letztendlich der gewünschte mittlere Effektivstrom geflossen ist.

In weiterer bevorzugter Ausgestaltung ist vorgesehen, daß zu große Intensitäten oder Regelungsschwingungen unterdrückt werden. Beispielsweise kann der Maximalstrom begrenzt werden. Die Vorrichtung kann weitere Alarmeinrichtungen aufweisen. Für den Fall, daß aufgrund zu großer Abweichungen, beispielsweise eines kurzzeitigen Spannungsausfalls oder dergleichen in Einzelfällen mit den erfindungsgemäßen Maßnahmen doch eine Schweißung gewünschter Qualität nicht erreicht werden kann, so kann vorgesehen sein, daß, wenn am Ende einer Scheißung die Abweichung des tatsächlichen mittleren Effektivstroms und Sollwertes des Gesamt-Effektivstroms zu groß ist, ein Alarmsignal ausgegeben wird und/oder daß eine Störung, bei der voraussehbar ist, daß eine Korrektur nicht zur Erreichung der vorgegebenen Toleranzen für den mittleren Effektivschweißstrom ausreicht, unverzüglich ein Alarmsignal - also in "Echtzeit" - ausgegeben wird.

Eine Zeitregelung kann mit der erfindungsgemäßen Intensitätsregelung kombiniert werden. Hierzu ist zur Sicherstellung der gewünschten Schweißqualität eines Schweißpunktes die Erfindung in bevorzugter Ausgestaltung vorgesehen, daß bei großen Störungen die Anzahl der durchzuführenden Schweißperioden während der Wechselspannungsperioden verändert wird; und daß der mittlere Effektivstrom jeder Periode derart neu bestimmt wird, daß die Gesamtschweißengerie für eine Schweißung auch bei einer der Schweißperiodenzahl eingehalten wird. In diesem Fall wird also subsidiär auf eine Zeitregelung durch Erhöhung oder auch Reduzierung der Schweißperiodenzahl einer Schweißung zurückgegriffen. Hierbei kann weiterhin in bevorzugter Ausgestaltung vorgesehen sein, daß dabei die Bedingungen der allgemeinen automatischen Produktionszyklen des Systems berücksichtigt werden, in dem die Widerstandsschweißvorrichtung eingeordnet ist. Wenn beispielsweise dank der Sicherheitseinrichtung des Produktionssystems, in welchem die Schweißmaschine integriert ist, eine Verlängerung der Schweißzeit vorgesehen werden kann, können ein oder mehrere Schweißperioden zur Regelung vorgesehen werden. Dies kann beispielsweise in dem Fall vorkommen, wenn eine zufällige Spannungsveränderung einen wesentlichen Strommangel in der letzten vorgesehenen Schweißperiode verursacht, der durch Stromkompensation nicht mehr kompensiert werden kann. Es kann auch wünschenswert sein die Intensitätsvariationen von einer Periode zur nächsten zu begrenzen, indem die Zeit verlängert wird, um große Störungen besser zu verteilen. Im Fall einer solchen Zeitverlängerung durch Hinzufügen ein oder mehrerer Schweißperioden redefiniert der Adaptionsrechner den Sollwert des mittleren Effektivstromes pro Periode dahingehend, daß das Gesamtprodukt rI²t identisch dem für die gesamte Schweißung Vorgesehenen bleibt.

Selbstverständlich kann in dem Fall, in dem eine große Störung einen Stromüberschuß am Anfang der Schweißung bedingt vorgesehen sein, daß das System ein oder mehrere Perioden am Ende der Schweißung unterdrückt, nachdem ebenfalls der Sollwert des mittleren Effektivstroms pro Periode eingehend neu berechnet wurde, daß das Produkt rI²t dem für die gesamte Schweißung Vorgesehenen entspricht.

Weitere bevorzugte Ausgestaltungen der Erfindung ergeben sich aus den Unteransprüchen und aus der nachfolgenden Beschreibung in der ein bevorzugtes Ausführungsbeispiel der Erfindung unter Bezugnahme auf die Zeichnung im einzelnen erläutert ist. Dabei zeigt:
- Figur 1: zwei zwischen zwei Elektroden angeordnete miteinander zu verschweißende Bleche;
- Figur 2: ein prinzipielles Schema einer Widerstandsschweißvorrichtung, bei der die Erfindung eingesetzt wird;
- Figur 3: den Phasenverlauf von Strom und Spannung bei einer die Effektivstrom-Intensität regelnden Schweißeinrichtung, wie sie der Erfindung zugrundeliegt;
- Figur 4: eine Darstellung der Veränderung des Effektivstroms mit der Phasenverschiebung des Stromeinsatzes;
- Figur 5: ein Blockschaltbild einer das erfindungsgemäße Verfahren verwirklichenden Schaltung; und
- Figur 6: den Effektivstromverlauf während einer Schweißung mit 6 Perioden.

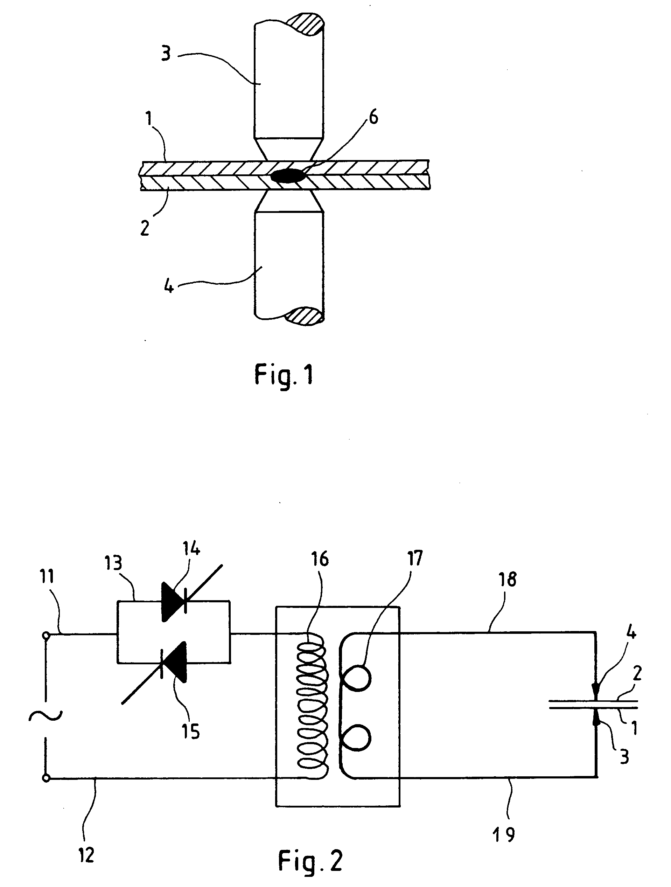

Figur 1 zeigt zwei miteinander zu verschweißende Bleche 1, 2 mittels Scheißelektroden 3, 4. Es ist erkennbar, daß 6 einen Schweißpunkt nach Durchgang des Schweißstromes darstellt, der zwischen den Elektroden lokalisiert ist.

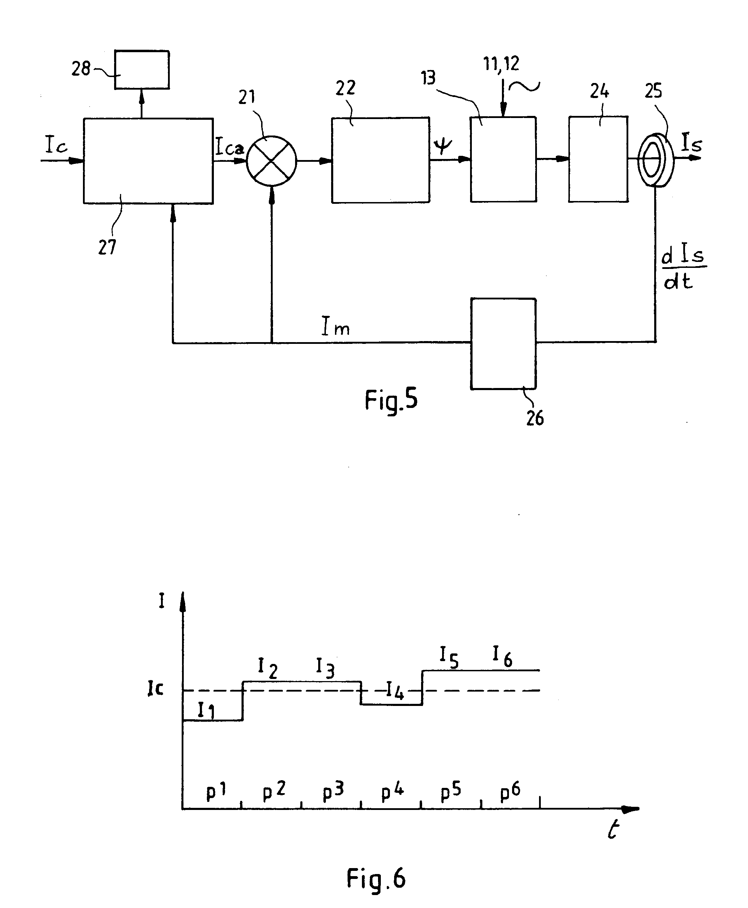

Figur 2 zeigt das Prinzipschema einer Widerstandsschweißmaschine. Über 11 und 12 erfolgt die elektrische Primärversorgung beispielsweise mit 220 oder 380 Volt Wechselspannung. Es folgen die drei Hauptelemente der Maschine: 13 bezeichnet einen Thyristorunterbrecher, der aus zwei antiparallel angeordneten Thyristoren 14 und 15 besteht. Die Steuereingänge der Thyristoren 14 und 15 werden durch die Regelelektronik gesteuert, wie sie für die Erfindung in der Figur 5 dargestellt ist. Statt zweier antiparallel angeordneter Thyristoren könnte auch ein Triac eingesetzt werden. Der Unterbrecher 13 versorgt die Primärspule 16 eines Schweißtransformators, dessen Sekundärspule im allgemeinen eine Spannung von 3 bis 20 Volt liefert und über Arme 18, 19 mit den Schweißelektroden 3, 4 verbunden ist, die von der Armen 18, 19 getragen sind. Über die Elektroden 3, 4 fließt der Schweißstrom, um die Verschweißung der Bleche 1, 2 zu bewirken. Wie schon oben ausgeführt werden hierzu die Elektroden mit einer vorgestimmten Kraft von im allgemeinen mehreren Hundert Decanewton pneumatisch gegen die Bleche gedrückt. Die in der Regel pneumatischen Andruckeinrichtungen sind nicht Teil der Erfindung und werden daher nicht weiter im einzelnen beschrieben.

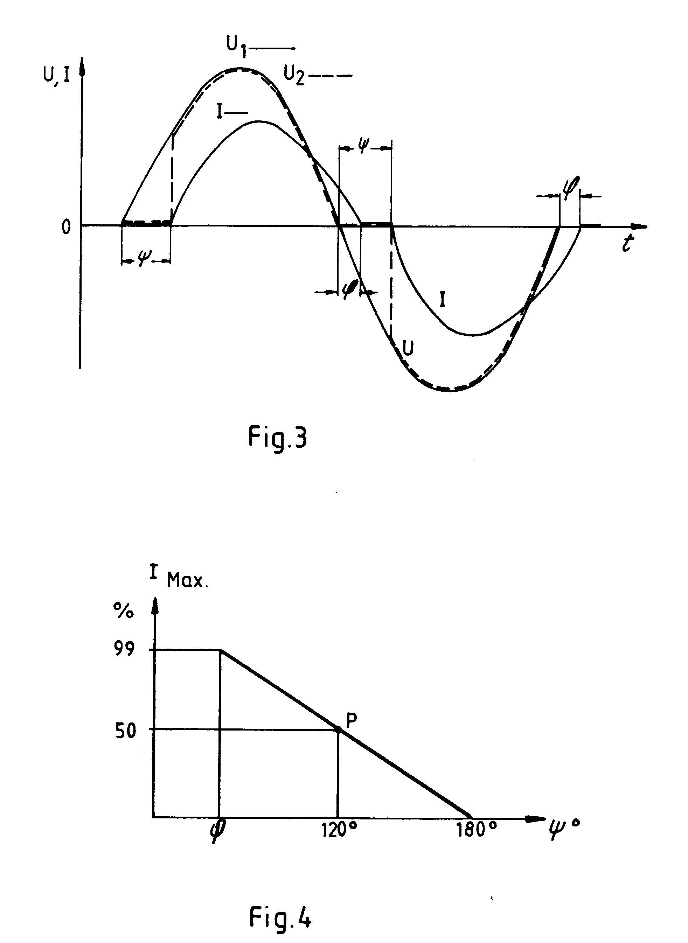

Die Figur 3 zeigt grundsätzlich das Prinzip der Stromsteuerung mittels Thyristoren. Auf der Ordinate sind die Spannung U und der momentane Strom I, auf der Abszisse die Zeit t aufgetragen. Man stellt fest, daß die Thyristoren um eine Phase-oder Winkelverschiebung ψ nach dem jeweiligen Nulldurchgang der Spannung gezündet werden und die Stromintensität erst mit einer Verzögerung φ nach dem erneuten Nulldurchgang der Spannung erst ihrerseits null erreicht. Der Winkel ψ wird durch die Steuerung oder Regelung bestimmt, während der Winkel φ lediglich eine Konsequenz der Reaktanz des elektrischen Kreises der Maschine ist. Durch diese Regelung des Stromes durch Variation des Zündwinkels des Thyristors wird der mittlere oder Effektivstrom während einer Periode verändert, d.h. der Strom, der für die Schweißung signifikativ ist. Die Figur 4 zeigt eine Regelungstafel einer Schweißmaschine. Die Ordinate stellt die gewünschte Schweißintensität in Prozent der Maximal-Intensität der Maschine dar, die dem zur Erreichung dieser Intensität vorgesehenen, auf der Abszisse angegebenen Zündwinkel des Thyristors entspricht.

In Figur 5 ist das Prinzipschema der erfindungsgemäßen Regelung und Anpassung der Stromintensität dargestellt. Die Vorrichtung weist einen Komparator 21 zum Vergleich der (erfindungsgemäß angepaßten) Sollintensität I_{ca} mit der tatsächlichen Effektivintensität des Stromes auf. Es ist weiterhin ein Phasenverschiebungsrechner 22 vorgesehen, der aufgrund des durch den Komparator 21 vorgenommen Vergleichs die Zündphase ψ des Unterbrechers 13 über dessen Steuergang (bzw. den der antiparallel gerichteten Thyristoren 14, 15 - Figur 2) regelt, um so den Stromfluß von der Spannungsversorgung 11, 12 zum Transformator 24 (mit Primärspule 16 und Sekundärspule 17 - Figur 2) zu regeln, so daß sich an der Schweißstelle der Schweißstrom Iₛ ergibt.

Dort ist eine Torusspule 25 angeordnet, die die Messung des Schweißstromes mittels des nachgeordneten Integrators 26 durch Integration der Veränderung des Stromes bewirkt und deren Ausgang Iₘ im Komparator 21 mit dem angepaßten Sollwert I_{ca} verglichen wird. Hierdurch wird die Regelung des Schweißstromes der Periode n+1 aufgrund der Messung der Perioden vorgenommen. Beim Stand der Technik ist der dem Komparator 21 zugeführte Sollwert konstant, während er erfindungsgemäß verändert und angepaßt wird.

Hierzu werden die von der Spule 25 über den Integrator 26 gelieferten Informationen über den tatsächlichen Stromfluß durch den Schweißpunkt einem dem Komparator 21 vorgeordneten Adaptionsrechner 27 zugeführt, der wiederum ausgehend von einem festen vorgegebenen Sollwert I_{c} eine Regelung des angepaßten Sollwert I_{ca} aufgrund der tatsächlichen Stromintensitäten sämtlicher schon erfolgter Schweißperioden und der noch verbleibenden auszuführenden Schweißperioden an einem Schweißpunkt durchführt. Durch diese Adaption des Stromsollwerts I_{ca} wird eine Verbesserung gegenüber der üblichen Regelung (von einer Periode zur nächsten) erzielt. Die Figur 6 zeigt ein Beispiel für diese erf indungsgemäße adaptive Regelung.

Der tatsächliche Strom I₁ während der ersten ungeregelten Periode p1 liegt unter dem fest vorgegebenen Sollwert I_{c} wie zum Stand der Technik oben in der Beschreibungseinleitung erläutert wurde. Man stellt dann weiterhin fest, daß zunächst die Ströme I₂ und I₃ während der Perioden p2 und p3 identisch sind aber über dem vorgegebenen Sollwert I_{c} liegen, um so den Intensitätsverlust aufgrund der Schwäche der Intensität I₁ während der Periode p1 zu kompensieren, wobei der Rechner 27 diese Schwäche zunächst auf die noch zu erwartenden Perioden p2 bis p6 zu verteilen trachtet.

Wenn beispielsweise aufgrund eines Spannungseinfalls, weil gegebenenfalls eine weitere Schweißmaschine Schweißungen durchführt, während der Periode p4 der tatsächliche Strom I₄ einfällt, so wird dieser Einfall während der nachfolgenden Perioden p5 und p6 zusätzlich zu dem Intensitätsmangel während der Periode p1 kompensiert, so daß der Gesamtstrom während der Perioden p5 und p6 nicht nur über dem vorgegebenen Sollwert I_{c}, sondern auch höher liegt als der Strom I₂, I₂. Bei der an sich bekannten Momentanregelung würde der Strom für die Perioden p2, p3, p5, p6 lediglich auf den fest vorgegebenen Sollwert I_{c} geregelt, wodurch Intensitätsmängel der Perioden I₁, I₄ nicht kompensiert würden können, was durch die beim erfindungsgemäßen Verfahren vorgesehene Sollwertanpassung und damit Erhöhung der Ströme während der Perioden p2, p3, p5, p6 in der erörterten Weise über den fest vorgegebenen Sollwert I_{c} ermöglicht wird. Hierdurch wird bei der Erfindung erreicht, daß der mittlere Effektivstrom über sämtliche Perioden dem vorgegebenen Sollwert entspricht und damit die gesamte Stromintensität über die Schweißung ebenfalls den gewünschten Wert aufweist, so daß die Qualität der Schweißung der Gewünschten entspricht. Es ist weiterhin eine Alarmeinrichtung 28 für den Fall vorgesehen, daß, beispielsweise aufgrund eines Spannungsabfalls auf null zu große Intensitätsverluste im Schweißstrom auftreten, die durch die Intensitätsregelung mittels Phasenverschiebung nicht mehr kompensiert werden können.

Weiterhin sieht das bevorzugte erfindungsgemäße Verfahren vor, daß, falls das gesamte Produktionssystem in welchem die Schweißmaschine angeordnet ist, eine Veränderung der Schweißzeit gestattet, die Schweißperiodenanzahl zur Setzung eines Schweißpunktes verändert werden, um beispielsweise subsidiär zur Intensitätsregelung durch eine Zeitregelung derartige extreme Weichungen zu kompensieren. Dies geschieht insbesondere, wenn beispielsweise ein Einfall der Intensität während der letzten vorgesehenen Schweißperiode durch die Intensitätsregelung nicht mehr kompensiert werden kann. Die Zeit- oder Periodenregelung kann darüber hinaus dazu dienen die Intensitätsvariation während einer Wechselspannungsperiode zur nächsten zu minimieren, indem die Kompensation einer größeren Störung über eine größere Zeit erfolgt. Auch hierbei redefiniert der Adaptionsrechner 27 den Sollwert des mittleren Effektivstroms dahingehend, daß das Energieprodukt rI²t dem für die Schweißung vorgesehenen identisch bleibt. Wenn eine Störung einen erhebliche Stromüberschuß bewirkt, so können gegebenenfalls einzelne Perioden unterdrückt werden, wobei wiederum das Sollwert des mittleren Effektivstroms angepaßt wird, so daß über die gesamte Schweißung das vorgesehene Energieprodukt rI²t erhalten bleibt.

## Patentansprüche

1. Verfahren zum Widerstandsschweißen mittels Wechselstrom, wobei während einer Periode der tatsächliche effektive Schweißstrom gemessen wird und die Phasenverschiebung des Einsatzes des Stromflusses während der nächsten Periode der Wechselspannung regelt, dadurch gekennzeichnet, daß Abweichungen des tatsächlichen effektiven Schweißstroms während sämtlicher ausgeführter Schweißperioden gegenüber einen gewünschten Effektivstrom wahrend der noch auszuführenden Schweißperioden berücksichtigt werden.

2. Verfahren nach Anspruch 1, dadurch gekennzeichnet, daß die Abweichungen zur Anpassung des Sollwerts für die Regelung der Phasenverschiebung herangezogen werden.

3. Verfahren nach Anspruch 1 oder 2, dadurch gekennzeichnet, daß zu große Intensitäten oder Regelungsschwingungen unterdrückt werden.

4. Verfahren nach einem der Ansprüche 1 bis 3, dadurch gekennzeichnet, daß, wenn am Ende einer Schweißung die Abweichung des tatsächlichen mittleren Effektivstroms und Sollwertes des Gesamt-Effektivstrom zu groß ist ein Alarmsignal ausgegeben wird.

5. Verfahren nach einem der Ansprüche 1 bis 4, dadurch gekennzeichnet, daß bei einer Störung, bei der voraussehbar ist, daß eine Korrektur nicht zur Erreichung der vorgegebenen Toleranzen für den mittleren Effektivschweißstrom ausreicht, unverzüglich ein Alarmsignal ausgegeben wird.

6. Verfahren nach einem der Ansprüche 1 bis 5, dadurch gekennzeichnet, daß bei großen Störungen die Anzahl der durchzuführenden Schweißperioden während der Wechselspannungsperioden verändert wird; und daß der mittlere Effektivstorm jeder Periode derart neu bestimmt wird, daß die Gesamtschweißenergie für eine Schweißung auch bei veränderbarer Schweißperiodenzahl eingehalten wird.

7. Schweißvorrichtung zur Durchführung des Verfahrens nach einem der Ansprüche 1 bis 6, zum Schweißen mittels Wechselstrom mit zwei Schweißelektroden (3,4), einer Energieversorgung (24) für diese sowie einer Einrichtung (27,21,22,13) zur Regelung des effektiven Schweißstroms während jeder Periode der Wechselspannung, wobei diese Einrichtung eine Spule (25) zur Messung des Schweißstroms und einen Rechner (27) beinhaltet, dadurch gekennzeichnet, daß die Spule (25) zur Messung des Schweißstromes über einen Integrator (26) zur Aufintegration des gemessenen Stromes mit dem Rechner (27) zur Berücksichtigung von Abweichungen des tatsächlichen effektiven Schweißstromes während vorangegangener Schweißperioden einer Schweißung gegenüber einem gewünschten effektiven Schweißstomfluß bei den weiteren durchzuführenden Schweißperioden der jeweiligen Schweißung verbunden ist.

8. Vorrichtung nach Anspruch 7, gekennzeichnet durch eine Sicherheitseinrichtung zur Vermeidung zu großer Stromintensitäten oder Regelungsschwingungen.

9. Vorrichtung nach Anspruch 7 oder 8, gekennzeichnet durch eine Alarmeinrichtung zur Aussendung eines Alarms, wenn am Ende einer Schweißung die Abweichung des geflossenen tatsächlich Effektivstroms vom gewünschten Gesamtstromfluß zu groß ist.

10. Vorrichtung nach einem der Ansprüche 7 bis 8, gekennzeichnet durch eine Sofort-Alarmeinrichtung zur Ausgabe eines Alarms, wenn eine Störung so groß ist, daß voraussehbar ist, daß vornehmbare Korrekturen nicht zur Einhaltung der Toleranzen für den gewünschten mittleren Gesamteffektivschweißstrom führen.

11. Vorrichtung nach einem der Ansprüche 7 bis 10, gekennzeichnet durch eine Einrichtung zur Veränderung der Schweißperiodenzahl während einer Schweißung gegenüber der vorbestimmten Sollperiodenzahl unter Neudefinition des mittleren Soll-Effektivstroms für jede Periode zur Erzielung des gewünschten Gesamtenergieflusses während einer Schweißung auch bei abweichender Schweißperiodenzahl derselben.

## Claims

1. Method for resistance welding by means of alternating current, in which during one period the actual effective welding current is measured and the phase shift of the start of the current flow during the next a.c. voltage period is controlled, characterized in that divergences of the actual effective welding current during all the welding periods performed compared with a desired effective current during the welding period still to be performed are taken into account.

2. Method according to claim 1, characterized in that the divergences are used for adapting the desired value for the phase shift control.

3. Method according to claim 1 or 2, characterized in that excessive intensities or control oscillations are suppressed.

4. Method according to one of the claims 1 to 3, characterized in that if at the end of a welding operation the divergence of the actual average effective current and the desired value of the total effective current is excessive an alarm signal is emitted.

5. Method according to one of the claims 1 to 4, characterized in that in the case of a fault, in which it can be forecast that a correction will not be adequate for obtaining the predetermined tolerances for the average effective welding current, an alarm signal is immediately emitted.

6. Method according to one of the claims 1 to 5, characterized in that in the case of major faults the number of welding periods to be performed during the a.c. voltage periods is modified and that the average effective current of each period is redefined in such a way that the total welding energy for a welding operation is also maintained with a variable number of welding periods.

7. Welding apparatus for performing the method according to one of the claims 1 to 6, for welding by means of alternating current with two welding electrodes (3,4), a power supply (24) for the same, as well as a device (27,21,22,13) for controlling the effective welding current during each a.c. voltage period, in which said device incorporates a coil (25) for measuring the welding current and a computer (27), characterized in that the coil (25) for measuring the welding current is connected by means of an integrator (26) for the up-slope integration of the measured current to the computer (27) for taking account of divergences of the actual effective welding current during preceding welding periods of a welding operation compared with a desired effective welding current flow during further welding periods of the particular welding operation still to be carried out.

8. Apparatus according to claim 7, characterized by a safety device for avoiding excessive current intensities or control oscillations.

9. Apparatus according to claim 7 or 8, characterized by an alarm device for giving an alarm if, at the end of a welding operation, the divergence of the flown actual effective current from the desired total current flow is excessive.

10. Apparatus according to one of the claims 7 and 8, characterized by a no-delay alarm device for giving an alarm if a fault is so large that it can be forecast that corrections which can be performed will not lead to the maintenance of the tolerances for the desired average total effective welding current.

11. Apparatus according to one of the claims 7 to 10, characterized by a device for modifying the number of welding periods during a welding operation compared with the predetermined number of desired periods, accompanied by a redefinition of the average desired effective current for each period for obtaining the desired total energy flow during a welding operation, even in the case of a differing number of welding periods thereof.

## Revendications

1. Procédé de soudage par résistance en courant alternatif, le courant de soudage effectif réel étant mesuré pendant une période et réglant le déphasage de la charge du flux de courant pendant la période suivante de la tension alternative, caractérisé par une prise en compte des écarts du courant de soudage effectif réel, pendant toutes les périodes de soudage exécutées, par rapport à un courant effectif voulu, pendant les périodes restant à effectuer.

2. Procédé suivant la revendication 1, caractérisé en ce que les écarts sont utilisés pour adapter la valeur de consigne pour la régulation du déphasage.

3. Procédé suivant l'une des revendications 1 et 2, caractérisé par la suppression d'intensités excessives ou de pompages dans la régulation.

4. Procédé suivant l'une quelconque des revendications 1 à 3, caractérisé par le déclenchement d'un signal d'alarme, si l'écart entre le courant effectif moyen réel et la valeur de consigne du courant effectif total est excessif à la fin d'une soudure.

5. Procédé suivant l'une quelconque des revendications 1 à 4, caractérisé par le déclenchement immédiat d'un signal d'alarme, en présence d'un défaut Laissant prévoir qu'une correction ne suffit pas pour respecter les tolérances prédéfinies pour le courant de soudage effectif moyen.

6. Procédé suivant l'une quelconque des revendications 1 à 5, caractérisé en ce que le nombre de périodes à exécuter est modifié pendant les périodes de tension alternative, en cas de défauts importants, et en ce que le courant effectif moyen de chaque période est redéfini, de sorte que l'énergie de soudage totale pour une soudure est maintenue, même avec un nombre de périodes modifiable.

7. Dispositif de soudage pour la réalisation du procédé suivant l'une quelconque des revendications 1 à 6, pour le soudage en courant alternatif, avec deux électrodes (3, 4), une alimentation en énergie (24) pour ces dernières, ainsi qu'un dispositif (27, 21, 22, 13) pour la régulation du courant de soudage effectif pendant chaque période de la tension alternative, ce dispositif comportant une bobine (25) pour la mesure du courant de soudage et un calculateur (27), caractérisé en ce que la bobine (25) pour la mesure du courant de soudage est raccordée, par l'intermédiaire d'un intégrateur (26) pour les valeurs de courant mesurées, à un calculateur (27), pour la prise en compte des écarts du courant de soudage effectif réel, pendant les périodes de soudage antérieures d'une soudure, par rapport à un flux de courant effectif voulu, lors des autres périodes à exécuter de la soudure respective.

8. Dispositif suivant la revendication 7, caractérisé par un dispositif de sécurité pour éviter des intensités excessives de courant ou des pompages dans la régulation.

9. Dispositif suivant l'une des revendications 7 et 8, caractérisé par un dispositif d'alarme pour l'émission d'une alarme en cas d'écart excessif, à la fin d'une soudure, entre le courant effectif réel de passage et le flux total de courant recherché.

10. Dispositif suivant l'une quelconque des revendications 7 à 8, caractérisé par un dispositif d'alarme immédiate pour l'émission d'une alarme, en présence d'un défaut laissant prévoir que les corrections, qui peuvent être assurées, ne débouchent pas sur le respect des tolérances pour le courant de soudage effectif total moyen recherché.

11. Dispositif suivant l'une quelconque des revendications 7 à 10, caractérisé par un dispositif pour modifier le nombre de périodes de soudage pendant une soudure par rapport au nombre de périodes de consigne prédéfini, avec une redéfinition du courant effectif moyen de consigne pour chaque période, en vue d'obtenir le flux d'énergie total souhaité pendant une soudure, même pour un nombre de périodes différent de cette dernière.
